# EUROPEAN PATENT APPLICATION

(11) **EP 4 838 546 A1**
(43) Date of publication of application: **11.11.2026**
(21) Application number: 26176685.1
(22) Date of filing: 05.05.2026
(51) Int. Cl.: H01F 38/14, H01F 27/28

(54) **ROSE COIL SYSTEM FOR INDUCTIVE CHARGING**

(30) Priority: 05.05.2025 US 202563800176 P
(71) Applicant: Bardy Diagnostics, Inc., Bellevue, WA 98005 (US)
(72) Inventor: LARSEN, William, Bellevue, 98005 (US)
(74) Representative: Reddie & Grose LLP

(57) **Abstract**

A planar spiral inductor coil known as a roil coil maximizes the inductance per unit length. A rose coil is comprised of two spiral coils with the flat sides stacked on top of each other. Both spiral coils are wound in the same rotational direction (clockwise or counterclockwise) and thus, the direction of current through both spiral coils is in the same direction making the magnetic field vectors sum between the two coils.

## Description

### FIELD

The present disclosure generally relates to inductors, and in particular to a system for inductive charging.

### BACKGROUND

Conventional planar spiral induction coils are typically formed from a single conductive wire having one or two terminals positioned near the outermost portion of the coil. During operation, electrical current flows from the outer radius of the spiral toward the innermost region of the coil. Once the current reaches the inner portion, it must be returned to the outer terminal region in order to complete the electrical path. To accomplish this return, traditional planar spiral coils employ a conductive path, such as a jumper wire or trace, that routes current from the inner portion of the coil back to the outer terminal.

In many existing designs, this conductive return path is implemented as a straight or substantially straight wire segment that lies within or adjacent to the spiral geometry. While such straight return paths provide electrical continuity, they do not contribute to inductance or magnetic field generation. Instead, the added conductor length increases resistive losses, including conductor resistance and proximity effects arising from closely spaced current-carrying elements. As a result, conventional planar spiral coils may suffer from reduced efficiency, limited inductance per unit length, and increased power loss, particularly in applications requiring strong magnetic fields or efficient inductive power transfer.

These limitations are especially problematic in modern inductive systems, such as wireless power transfer, charging mats, and compact or low-profile devices, where space constraints, efficiency, and alignment tolerance are critical design considerations. The inability of conventional planar spiral coils to effectively utilize the return path for inductance generation constrains achievable magnetic energy density and degrades overall system performance.

Accordingly, there exists a need for improved coil configurations that overcome these deficiencies. Specifically, there is a need for an inductive coil system that increases inductance per unit conductor length, reduces resistive and proximity losses associated with non-inductive return paths, and enhances magnetic field strength without increasing overall size or complexity. Such improvements would enable more efficient energy storage in the magnetic field and improved performance in inductive charging and other electromagnetic applications.

### SUMMARY

The present disclosure relates to a rose coil system for inductive charging. Specifically, the rose coil system may be formed by shaping a conductor into a spiral shape with two spiral coils that have flat sides and are stacked directly on top of each other. The spiral coils are wound in the same rotational direction, either clockwise or counterclockwise. As a result, the currents flowing through both coils move in the same direction and cause their magnetic fields to combine, resulting in a stronger overall magnetic field between the two coils. The illustrated rose coil system improves the overall inductive field, which allows for charging in different orientations. Aspects of the subject matter described herein may be useful alone or in combination with one or more other aspects described herein.

In an aspect of the present disclosure there is provided a rose coiled system for inductive charging comprising a single conductor in continuous spiral shape creating a first coil and a second coil, an entrance terminal, and an exit terminal. In this embodiment, the first coil and the second coil are layered on top of one another.

Optionally, the rose coiled system for induction further comprises a center-cross point and a conductive path, wherein the conductive path is between the first coil and the second coil. Optionally, the system has a constant pitch length.

Optionally, the first coil decreases at a radius double the pitch length and the second coil increases at a radius double the pitch length.

Optionally, the single conductor has no straight portion.

Optionally, the first coil decreases in radius by approximately twice the pitch length per turn and the second coil increases in radius by approximately twice the pitch length per turn.

Optionally, the single conductor has no straight portions.

Optionally, the first coil includes a first number of turns and the second coil includes a second number of turns and the first number of turns plus the second number of turns is an even number.

Optionally, the even number is four.

Optionally, one or more cross points at which the first coil and the second coil intersect at locations other than the center-cross point.

In another aspect of the present disclosure there is provided a system for induction including: a single conductor forming a first rose coil and a second rose coil; an entrance terminal; and an exit terminal; wherein the first rose coil includes an upper first coil and a lower first coil layered on top of one another, the second rose coil comprise an upper second coil and a lower second coil layered on top of one another, and wherein the first rose coil and the second rose coil are positioned side-by-side.

Optionally, a current flows through the first rose coil and the second rose coil in the same rotational direction.

Optionally, the single conductor continuously extends through the first rose coil and the second rose coil.

Optionally, each of the first rose coil comprises a center-cross point and a central conductive path.

Optionally, the first rose coil and the second rose coil form a figure-eight coil.

In another aspect of the present disclosure there is provided a charging device comprising: a charging mat; and a rose-coiled system disposed within or beneath the charging mat and configured for inductive charging of an external device.

Optionally, the charging mat permits inductive charging without precise alignment between the external device and the rose-coiled system.

Optionally, the rose-coiled system is embedded in a planar region of the charging mat.

Optionally, the external device comprises a portable electronic device, a wearable device, a medical device, or an electromechanical device.

In another aspect of the present disclosure there is provided a charging device comprising: a charging mat; and the single conductor of disposed within or beneath the charging mat and configured for inductive charging of an external device.

In another aspect of the present disclosure, there is provided a system for induction comprises a single conductor comprising a first rose coil and second rose coil. Herein, the first rose coil comprises a first coil and a second coil and the second rose coil comprises a first coil and a second coil. Further, the system for induction comprises an exit terminal. Finally, the first rose coil and the second rose coil will be side-by-side.

Still other embodiments will become readily apparent to those skilled in the art from the following detailed description, wherein are described embodiments by way of illustrating the best mode contemplated. As will be realized, other and different embodiments are possible and the embodiments' several details are capable of modifications in various obvious respects, including time and clustering of events, all without departing from the scope. Accordingly, the drawings and detailed description are to be regarded as illustrative in nature and not as restrictive.

### BRIEF DESCRIPTION OF THE DRAWINGS

The present disclosure will be further described by way of example with reference to the accompanying drawings, in which:
Figure 1 illustrates an example of a rose coil system for indictive charging, according to embodiments of the present disclosure.
Figure 2 illustrates a second example of a rose coil system for indictive charging, according to embodiments of the present disclosure.
Figure 3 illustrates a third example of a rose coil system for indictive charging, according to embodiments of the present disclosure.
Figure 4 illustrates the third example of a rose coil system for indictive charging as illustrated in Figure 3, according to embodiments of the present disclosure. Here, hidden coils are disclosed for illustrative purposes.
Figure 5 illustrates alternative example embodiments of a rose coil system for indictive charging.

### DETAILED DESCRIPTION

The present disclosure provides a rose coil system 100 for inductive charging. Conventional planar spiral coils comprise a single wire with one or two terminals. Once an electric current moves through one coil from the outermost portion of the coil to the innermost portion, the current must be transferred back to the terminal located in the outermost portion of the wire coil. To do this, traditional induction coils utilize a conductive path made from a wire piece driven by a source outside the coil. The conductive path in conventional planar spiral coils is typically a straight wire that provides a return path for energy in the inner coil to jump to the terminal/outermost portion of the coil. However, these conventional methods add conductor and proximity resistance without adding much inductance (the ratio of the voltage to the rate of change of current). A new method is needed, which also provides enhanced inductance, which will provide for a greater amount of magnetic energy that can be created from the inductor system.

The present rose coil system 100 includes a planar spiral inductor coil that maximizes the inductance per unit length by spiraling the segment of a conductive wire 122 that is traditionally used as the conductive path 116 to provide for enhanced inductance. The illustrated rose coil system 100 comprises a wire 122, an entrance terminal 112 and an exit terminal 114.

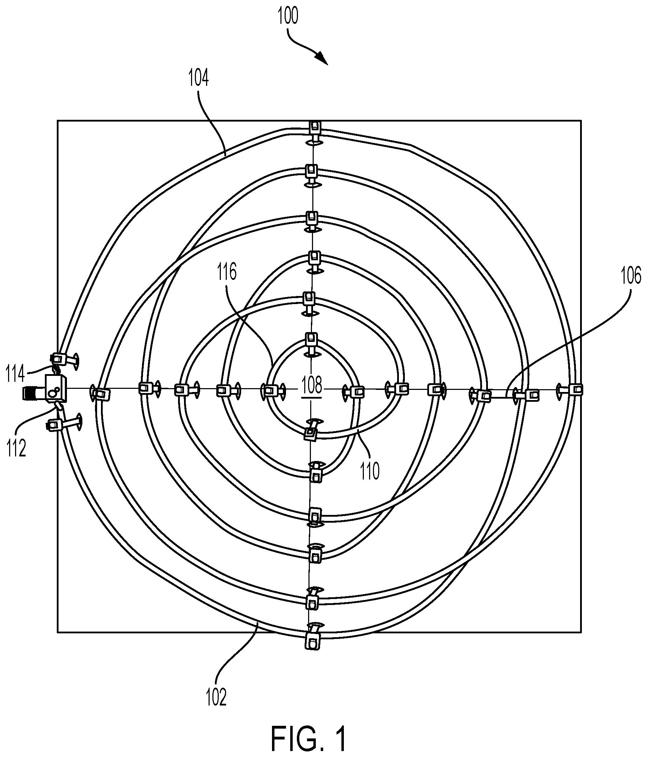

Figure 1 illustrates a first example of a rose coil system 100 for inductive charging, according to embodiments of the present disclosure. The rose coil system 100 comprises a wire 122, an entrance terminal 112 and an exit terminal 114.

The wire 122 comprises a first coil 102 and a second coil 104. The first coil 102 and the second coil 104 have flat sides stacked on top of each other. Both the first coil 102 and the second coil 104 are wound in the same rotational direction (clockwise or counterclockwise) and thus, the direction of current through both the first coil 102 and the second coil 104 is in the same direction making the magnetic field vectors sum between the first coil 102 and the second coil 104. As illustrated, first coil 102 and the second coil 104 are two different spirals created from the wire 122. The wire 122, the first coil 102 and the second coil 104 can be made from any inductive material. Preferably, the material is a conductive metal such as, for example, copper. The wire can also be coated with a variety of materials

As illustrated in Figure 1, the rose coil system 100 additionally comprises an entrance terminal 112, and an exit terminal 114. The entrance terminal 112 is housed at the beginning of the first coil 102 and the exit terminal 114 is housed at the end of the second coil 104. The entrance terminal 112 and the exit terminal 114 can be connected to a circuit.

The rose coil system 100 comprises a first coil 102 and a second coil 104 made from the same wire 122 with flat sides stacked on top of each other. Because the first coil 102 and the second coil 104 are made from the same wire 122, the rose coil system 100 comprises a center-cross point. 110. The center-cross point 110 is the point where the wire 122 converts from the first coil 102 to the second coil 104. In other words, the center-cross point 110 is a point of intersection of the first wire 102 and the second wire 104 where the current wire 122 is no longer moving towards the inner portion of the rose coil system 100 but towards the outer portion of the rose coil system 100. As such, when the current leaves the entrance terminal 112 and moves away from the entrance terminal 112, the current is in the first coil 102. However, once the current moves through the center-cross point 110, the current is now moving through the second coil 104 of the wire 122 and towards the exit terminal 114.

The rose coil system 100 of Figure 1 discloses the first coil 102 and the second coil 104 of the wire 122 intersecting at a center-cross point 110. The center-cross point 110 of the wire 112 creates a center 108 portion with a conductive path 116. The center 108 of the rose coil system 100 is created by a loop the wire 122 makes when converting from the first coil 102 to the second coil 104. The portion of the wire 122 created by the loop is the conductive path. As disclosed early, conventional prior art systems illustrate straight wire portions as a conductive path, which diminished the inductance of the system. Here, the conductive path 116 of the wire 122 is part of the spiral or coil. As such, by spiraling the segment of the wire 122 that is traditionally used to connect the center 108 of the rose coil system 100 back to the terminal, the inductance per length is maximized. This increases the quality factor of the rose coil system 100. With higher quality factor, the rose coil system 100 has less resistive power losses. Quality factor is important for inductive resonant power transfer where increased quality factor of the first coil 102 and the second coil 104 can increase power transmission efficiency at range.

As noted above, the rose coil system 100 can optionally and preferably comprise cross points 118. The cross points 118 are the points in which the first coil 102 and the second coil 104 intersect besides the center-cross point 110. As such, first coil 102 and the second coil 104 can intersect or cross depending on the number of spirals in the first coil 102 and the second coil 104. For example, the rose coil system 100 disclosed in Figure 1 is a 6-turn spiral rose coil. As such the number of cross points 118 is n-2 wherein n is the number of turns in the spiral. For example, as Figure 1 discloses a 6-turn rose coil system 100, the number of the number of cross points 118 will be (6)-2=4.

The rose coil system 100 illustrated in Figure 1 is a 6-turn spiral rose coil. As such, the rose coil system discloses a wire 122, an entrance terminal 112 and an exit terminal 114. The wire 122 comprises a first coil 102 and a second coil 104. In an illustrative embodiment, an electric current will leave the entrance terminal 112 and move through the first coil 102 in a clockwise or counterclockwise direction away from the entrance terminal 112. Sequentially, the current will arrive at the center-cross point located in the center 108 of the rose coil system 100 and move the same direction around the conductive path 116. Once the current moves through the conductive path 166 in the center of the rose coil system 100, the current next moves through the second coil 104 continuing in the same direction as before (clockwise or counterclockwise) towards the exit terminal 114. Because the first coil 102 and the second coil 104 are wound in the same rotational direction (clockwise or counterclockwise), the direction of current through both spiral coils is in the same direction making the magnetic field vectors sum between the first coil 102 and the second coil 104.

Another advantage of the rose coil system 100 is that the rose-petal configuration reduces the demands for "proper orientation" when a device is being charged compared to the conventional singe spiral configuration. Namely, with the conventional single spiral configuration, the device or system must be aligned/centered to optimally charge. Having the overlapping spirals improves the overall inductive field, which makes it easier to charge in different orientations. For example, the rose coil system 100 described herein can be used in a charging mat. As such, the user can easily place the device in need of charging on the charging mat and the rose coil system 100 will allow charging without the need to perfectly center or align the device.

As noted above, the illustrated rose coil system 100 may be used in a charging mat to deliver wireless power to a variety of other electronic devices that benefit from a flat or low-profile receiver geometry. The rose coil system 100 may additionally be used with pancake motors (axial-flux motors). Such motors may be used, for example, in electric vehicles, robotic systems, industrial automation equipment, drones, and other applications where space constraints favor thin motor architectures. In addition to axial-flux pancake motors, the rose coil system 100 may be used with other thin-profile motors, including brushless DC motors, slotless motors, torque motors, and disk-type actuators. These motors may be integrated into flat housings, stacked assemblies, or modular platforms in which traditional wired power connections are undesirable or impractical. The enhanced inductive field density and reduced alignment sensitivity provided by the disclosed rose-coil configuration enable effective wireless power transfer to such motors even when orientation varies or when the receiver coil is not precisely centered over the charging mat.

The rose coil system 100 may also be used with flat or planar energy storage components, such as thin lithium-ion battery packs, supercapacitors, hybrid battery-capacitor modules, or distributed energy storage layers integrated into a device housing. In such embodiments, a receiving coil coupled to the energy storage component may be inductively charged through a charging mat, allowing sealed or encapsulated designs without exposed electrical contacts. This may be particularly advantageous in applications requiring moisture resistance, repeated cleaning, or mechanical robustness.

Beyond chest patches, the rose coil system 100 may be included in a charging mat, which is used with a variety of wearable, implantable, or body-mounted medical devices, including drug-delivery pumps, neurostimulation devices, monitoring sensors, orthopedic supports with embedded electronics, and assistive devices. Many such devices employ thin housings or curved surfaces, making them compatible with planar inductive receiving coils supported by the illustrated charging mat architecture. The improved coupling tolerance of the rose-coil system will reduce the need for exact positioning by a user or clinician during charging.Although discussed herein primarily with reference to a planar spiral inductor coil, the present disclosure contemplates that the teachings provided herein may be applied to solenoids. For example, if a solenoid increased in height, it would leave a gap for a return path to fill in and return to the first terminal without jumping down with a wire. Accordingly, the various terms used to describe features and relative locations in a planar spiral inductor coil may be modified to describe recognizably similar features and relative locations in solenoids.

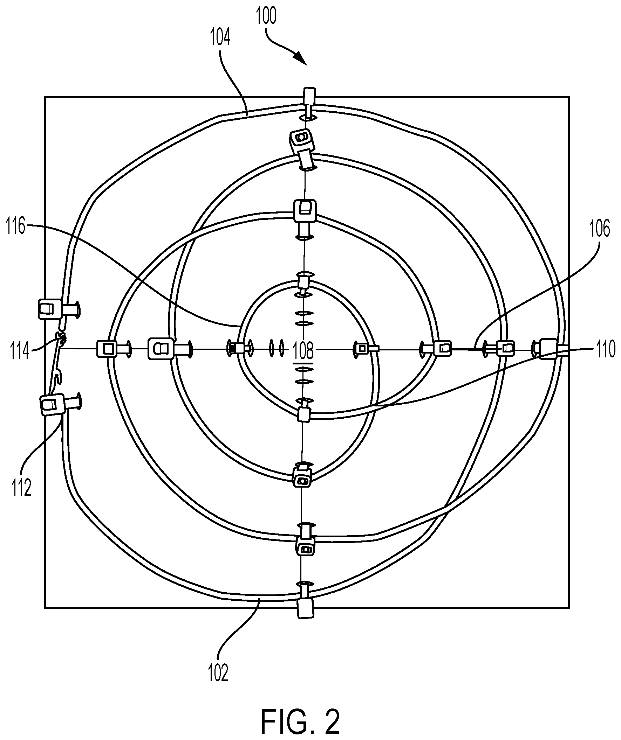

Figure 2 illustrates a second example of a rose coil system 100 for inductive charging, according to embodiments of the present disclosure. The rose coil system 100 as illustrated herein comprises a wire 122, an entrance terminal 112 and an exit terminal 114. The wire 122 comprises a first coil 102 and a second coil 104 that intersect at a center-cross point 110. The first coil 102 ends at the center-cross point 100, which creates the loop in the center 108 of the wire 122 of the conductive path 116. Following the conductive path 116, the second coil 104 of the wire begins, which ends at the exit terminal 114.

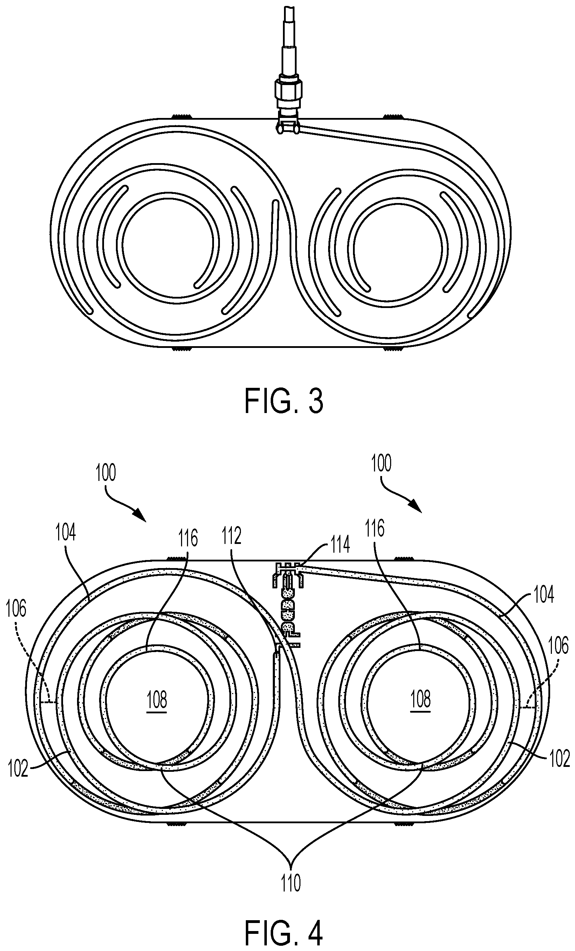

As illustrated, a rose coil system 100 can comprise a variety of cross points 118 based on the number of turns in the spiral. Figure 2 illustrates a 4-turn spiral rose coil. It is notable that, the rose coil systems illustrated herein will always comprise an even number of turns. It is preferable that the rose coil system 100 comprises 4 or more turns. For example, a rose coil system 100 can comprise an even number of turns (e.g., 4, 6, 8, 10, 12, 14 and so forth). The more turns the rose coil system 100 comprises, the more magnetic energy can be produced. The rose coil system 100 will also have a number of cross points 118, which are the points in which the first coil 102 and the second coil 104 of the wire 122 intersect besides the center-cross point 110. The number of cross points 118 will be n-2, where n is the number of turns. As illustrated herein, the 4-turn rose coil system 100 illustrated in Figure 4 comprises 2 cross points 118.

The rose coil systems 100 illustrated herein can be modified with a variety of basic variables including but not limited to the outer radius, inner radius, wire thickness, pitch, first layer turns, and second layer turns (e.g., the second layer turns differ from the first layer turns). The pitch length 106 is variable and is determined by the amount of space between each wire. For example, the pitch length 106 could be 1 inch. Because the rose coil system comprises a first coil 102 and a second coil 104 stacked on top of one another, the radius of the first coil 102 will decrease by two pitch lengths per turn. As an illustrative example, Figure 2 exhibits a 4-turn planar spiral. For an even numbered turn spiral, the first coil 102 or the second coil 104 of the wire 112 will decrease in radius by a factor of two pitch lengths per turn. This allows for there to be two pitch lengths of space between each turn in the first coil 102. These two pitch lengths become occupied by the second coil 104, which increases its radius by two pitch lengths per turn. Thus, every portion of the wire 112 is radially orthogonal to the center 108 of the rose coil system 100, which maximizes inductance.

Figure 3 illustrates an example application of the rose coil system 100. The rose coil system 100 can be applied to figure-eight coils such as the one illustrated in Figure 3. If applied, the rose coil system 100 will be duplicated such that there are two rose coil systems 100 side by side. A figure-eight coils including the rose coil system 100 is further disclosed in Figure 4.

Figure 4 illustrates a third example embodiment of a rose coil system 100 for inductive charging where the rose coil system 100 is duplicated and used in a figure-eight coil. As demonstrated, the rose coil system 100 can also be used in figure-eight coils. Figure-eight coils comprise two rose coil systems 100 and are constructed by placing two rose coil systems 100 side-by-side such that the current through the two wires 122 in the center travel in the same direction (clockwise or counterclockwise). Thus, the magnetic field vectors of the two rose coil systems 100 sum to create a B field that runs parallel to the plane of the rose coil systems 100. This is particularly useful for an inductive charging system where a solenoid is orthogonal to a planer coil. The figure-eight coil illustrated in Figure 4 is 2.13uH with 219mOhms or resistance at 100kHz. However, the specifications for figure-eight coils can vary.

The rose coil system 100 as applied to a figure-eight coil will comprise a wire 122, an entrance terminal 112 and an exit terminal 114. However, the wire 122 will be shaped into two first coils 102 and two second coils 104, which create two "roses." As such, there are also two centers 108, two center-cross points and two conductive paths 116. The two coils are connected via a portion of the wire which is curved.

As an illustrative example, when current flows through a figure-eight coil comprised of two rose coil systems 100, the current will leave the entrance terminal and enter the first coil 102 of the first rose coil system. The current will move through the first rose coil system as illustrated in the description above. For example, the currently will move through the first coil 102 decreasing in radius by an amount that is double the pitch length. Next the current will approach the center 108 of the rose coil system 100 and move through the center-cross point 110 and the conductive path 116. Finally, the current will move through the second coil 104, which increases in radius with each spiral in an amount double the pitch length. Once the current arrives at the end of the second coil, instead of arriving at the exit terminal 114, the current will instead begin to move through the first coil 102 of the second rose coil system 100. The current will move the second rose coil system 100 the same as the first, which consists of moving through the first coil 102 decreasing in radius by an amount that is double the pitch length. Next, the current will approach the center 108 of the second rose coil system 100 and move through its center-cross point 110 and the conductive path 116. Finally, the current will move through the second coil 104, which increases in radius with each spiral in an amount double the pitch length. After the current moves through the second coil 104 of the second rose coil system 100, the current will arrive at the exit terminal 114.

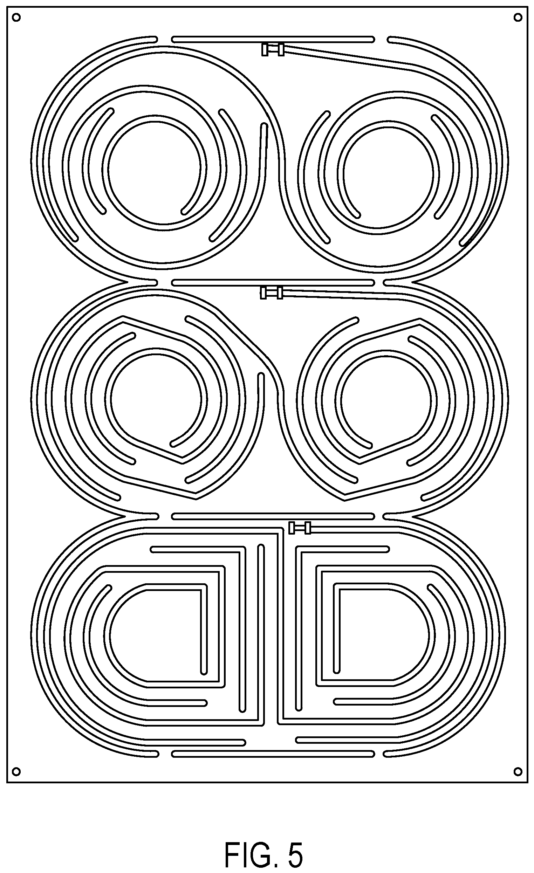

Figure 5 illustrates alternative example embodiments of a rose coil system 100 for indictive charging. As illustrated, it is not required that the first coil 102 and the second coil 104 are circular. Rather, they can take a variety of forms. However, the more circular the rose coil system 100, the higher the inductance. Conversely, the straighter portions of the rose coil system 100, the less inductance will be produced.

One variation of the rose coil system 100 design is to change the shape of the first coil and the second coil to have partially corners created from a curved shape. Another variation of the rose coil system 100 design is to have a mix of straight and curved edges in the coils. Another variation (not shown) is to have all sides of the coil straight.

The rose coil systems 100 described herein have a variety of applications. For example, the system can be applied to discrete inductor components, solenoids (e.g., transformers, speaker coils, etc.) and/or planar inductor coils (e.g., inductive cook tops, wireless power coils contactless payment, etc.).

In an example embodiment, the rose coil system 100 for indictive charging as illustrated in Figure 5, which comprises a figure-eight coil, can be used in a device that is long and thin. As such, the first rose coil system 100 will rest on one end of the long thin device and the second rose coil system 100 will rest on the opposing end of the long thin device. In a preferred embodiment. The first and second rose coil systems 100 will be centered on the opposing ends of the long thin device.

Certain terms are used throughout the description and claims to refer to particular features or components. As one skilled in the art will appreciate, different persons may refer to the same feature or component by different names. This document does not intend to distinguish between components or features that differ in name but not function.

As used herein, various units of measure may be referred to by associated short forms with various prefixes applied thereto as set by the International System of Units (SI), which one of ordinary skill in the relevant art will be familiar with.

As used herein, "about," "approximately" and "substantially" are understood to refer to numbers in a range of the referenced number, for example the range of -10% to +10% of the referenced number, preferably -5% to +5% of the referenced number, more preferably -1% to +1% of the referenced number, most preferably -0.1% to +0.1% of the referenced number.

Furthermore, all numerical ranges herein should be understood to include all integers, whole numbers, or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

As used in the present disclosure, a phrase referring to "at least one of" a list of items refers to any set of those items, including sets with a single member, and every potential combination thereof. For example, when referencing "at least one of A, B, or C" or "at least one of A, B, and C", the phrase is intended to cover the sets of: A, B, C, A-B, B-C, and A-B-C, where the sets may include one or multiple instances of a given member (e.g., A-A, A-A-A, A-A-B, A-A-B-B-C-C-C, etc.) and any ordering thereof. For avoidance of doubt, the phrase "at least one of A, B, and C" shall not be interpreted to mean "at least one of A, at least one of B, and at least one of C".

As used in the present disclosure, the term "determining" encompasses a variety of actions that may include calculating, computing, processing, deriving, investigating, looking up (e.g., via a table, database, or other data structure), ascertaining, receiving (e.g., receiving information), accessing (e.g., accessing data in a memory), retrieving, resolving, selecting, choosing, establishing, and the like.

Without further elaboration, it is believed that one skilled in the art can use the present description to use the claimed inventions to their fullest extent. The examples and aspects disclosed herein are to be construed as merely illustrative and not a limitation of the scope of the present disclosure in any way. It will be apparent to those having skill in the art that changes may be made to the details of the above-described examples without departing from the underlying principles discussed. In other words, various modifications and improvements of the examples specifically disclosed in the description above are within the scope of the appended claims. For instance, any suitable combination of features of the various examples described is contemplated.

While the invention has been particularly shown and described as referenced to the embodiments thereof, those skilled in the art will understand that the foregoing and other changes in form and detail may be made therein without departing from the scope.

Further features of the disclosure are defined in the following list of numbered clauses, and numbered sub-clauses:
Clause 1. A rose-coiled system for induction, comprising:
   a single conductor in a continuous spiral shape creating a first coil and a second coil;
   an entrance terminal; and
   an exit terminal;
   wherein the first coil and the second coil are layered on top of one another.
Clause 2. The system of clause 1, wherein the first coil and the second coil are wound in the same rotational direction.
Clause 3. The system of clause 1, further comprising a center-cross point at which the single conductor transitions from the first coil to the second coil.
Clause 4. The system of clause 3, further comprising a conductive path located in a central region between the first coil and the second coil, the conductive path forming part of the continuous spiral shape.
Clause 5. The system of clause 1, wherein the system has a pitch length between adjacent turns, wherein the pitch length is constant.
Clause 6. The system of clause 5, wherein the first coil decreases in radius by approximately twice the pitch length per turn and the second coil increases in radius by approximately twice the pitch length per turn.
Clause 7. The system of clause 1, wherein the single conductor has no straight portions.
Clause 8. The system of clause 1, wherein the first coil includes a first number of turns and the second coil includes a second number of turns and the first number of turns plus the second number of turns is an even number.
Clause 9. The system of clause 8, wherein the even number is four.
Clause 10. The system of clause 1, further comprising one or more cross points at which the first coil and the second coil intersect at locations other than the center-cross point.
Clause 11. A system for induction, comprising:
   a single conductor forming a first rose coil and a second rose coil;
   an entrance terminal; and
   an exit terminal;
   wherein the first rose coil includes an upper first coil and a lower first coil layered on top of one another, the second rose coil comprise an upper second coil and a lower second coil layered on top of one another, and wherein the first rose coil and the second rose coil are positioned side-by-side.
Clause 12. The system of clause 11, wherein a current flows through the first rose coil and the second rose coil in the same rotational direction.
Clause 13. The system of clause 11, wherein the single conductor continuously extends through the first rose coil and the second rose coil.
Clause 14. The system of clause 11, wherein each of the first rose coil comprises a center-cross point and a central conductive path.
Clause 15. The system of clause 11, wherein the first rose coil and the second rose coil form a figure-eight coil.
Clause 16. A charging device, comprising:
   a charging mat; and
   the rose-coiled system of clause 1 disposed within or beneath the charging mat and configured for inductive charging of an external device.
Clause 17. The charging device of clause 16, wherein the charging mat permits inductive charging without precise alignment between the external device and the rose-coiled system.
Clause 18. The charging device of clause 16, wherein the rose-coiled system is embedded in a planar region of the charging mat.
Clause 19. The charging device of clause 16, wherein the external device comprises a portable electronic device, a wearable device, a medical device, or an electromechanical device.
Clause 20. A charging device, comprising:
   a charging mat; and
   the single conductor of clause 11 disposed within or beneath the charging mat and configured for inductive charging of an external device.

## Claims

1. A rose-coiled system for induction, comprising:
a single conductor in a continuous spiral shape creating a first coil and a second coil;
an entrance terminal; and
an exit terminal;
wherein the first coil and the second coil are layered on top of one another.

2. The system of claim 1, wherein the first coil and the second coil are wound in the same rotational direction.

3. The system of claim 1 or 2, further comprising a center-cross point at which the single conductor transitions from the first coil to the second coil, optionally, the system further comprises a conductive path located in a central region between the first coil and the second coil, the conductive path forming part of the continuous spiral shape.

4. The system of any preceding claim, wherein the system has a pitch length between adjacent turns, wherein the pitch length is constant, optionally, wherein the first coil decreases in radius by approximately twice the pitch length per turn and the second coil increases in radius by approximately twice the pitch length per turn.

5. The system of any preceding claim, wherein the single conductor has no straight portions.

6. The system of any preceding claim, wherein the first coil includes a first number of turns and the second coil includes a second number of turns and the first number of turns plus the second number of turns is an even number, optionally, wherein the even number is four.

7. The system of any preceding claim, further comprising one or more cross points at which the first coil and the second coil intersect at locations other than the center-cross point.

8. A system for induction, comprising:
a single conductor forming a first rose coil and a second rose coil;
an entrance terminal; and
an exit terminal;
wherein the first rose coil includes an upper first coil and a lower first coil layered on top of one another, the second rose coil comprise an upper second coil and a lower second coil layered on top of one another, and wherein the first rose coil and the second rose coil are positioned side-by-side.

9. The system of claim 8, wherein a current flows through the first rose coil and the second rose coil in the same rotational direction.

10. The system of claim 8 or 9, wherein the single conductor continuously extends through the first rose coil and the second rose coil.

11. The system of any one of claims 8, 9 or 10, wherein each of the first rose coil comprises a center-cross point and a central conductive path.

12. The system of any one of claims 8 to 11, wherein the first rose coil and the second rose coil form a figure-eight coil.

13. A charging device, comprising:
a charging mat; and
the rose-coiled system of any of claims 1 to 7 disposed within or beneath the charging mat and configured for inductive charging of an external device.

14. The charging device of claim 13, wherein the charging mat permits inductive charging without precise alignment between the external device and the rose-coiled system.

15. The charging device of claim 13, wherein the rose-coiled system is embedded in a planar region of the charging mat.

16. A charging device, comprising:
a charging mat; and
the single conductor forming a first rose coil and a second rose coil disposed within or beneath the charging mat and configured for inductive charging of an external device, wherein the first rose coil includes an upper first coil and a lower first coil layered on top of one another, the second rose coil comprise an upper second coil and a lower second coil layered on top of one another, and wherein the first rose coil and the second rose coil are positioned side-by-side.
